(19) Europäisches Patentamt

European Patent Office

Office européen des brevets

(11) Publication number: **0 458 798 B1**

## (12) EUROPEAN PATENT SPECIFICATION

(45) Date of publication of patent specification: **01.06.94**   (51) Int. Cl.5: **H02H 9/00**, G06F 13/40

(21) Application number: **90901779.0**

(22) Date of filing: **19.12.89**

(86) International application number:
**PCT/EP89/01609**

(87) International publication number:
**WO 91/09440 (27.06.91 91/14)**

(54) **CURRENT CONTROL CIRCUIT.**

(43) Date of publication of application:
**04.12.91 Bulletin 91/49**

(45) Publication of the grant of the patent:
**01.06.94 Bulletin 94/22**

(84) Designated Contracting States:
**BE DE FR GB IT SE**

(56) References cited:
**EP-A- 0 241 905**
**FR-A- 2 615 669**
**GB-A- 2 056 198**

**ELECTRONIC DESIGN, 11 May 1989, HAS-BROUCK HEIGHTS, N , pages 75 - 80; Brady Barnes: "Insert boards into a live system without any hitches".**

(73) Proprietor: **BELL TELEPHONE MANUFACTUR-ING COMPANY Naamloze Vennootschap**
**Francis Wellesplein 1**
**B-2018 Antwerp(BE)**

(84) Designated Contracting States:
**BE DE FR GB IT SE**

(72) Inventor: **DE GROOTE, Jan, Lieven, Bert**
**Schalienhoefdreef 18**
**B-2230 Schilde(BE)**

(74) Representative: **Vermeersch, Robert et al**
**BELL TELEPHONE MANUFACTURING COM-PANY**
**Naamloze Vennootschap**
**Patent Department**
**Francis Wellesplein 1**
**B-2018 Antwerpen (BE)**

## Description

The present invention relates to a current control circuit for a circuit board carrying a parallel circuit comprising an input capacitor shunted by a load impedance , said control circuit including a current limiting resistance able to be first coupled between an electric power source and said parallel circuit and to be then short-circuited.

Such a current control circuit is already known from the article "Insert Boards Into A Live System Without Any Hitches", by B. Barnes, published in "Electronic Design" of May 11, 1989, pp. 75-80. Therein the problem is considered of inserting a so-called cold printed circuit board, i.e. carrying an uncharged decoupling input capacitor, into a power supply connector of a so-called hot rack, i.e. to which a number of active printed circuit boards have already been connected previously, the decoupling input capacitor of such an active board being in charged condition. During the insertion of the cold printed circuit board first a connection is established between the above parallel circuit and the electric power source via the current limiting resistance and afterwards this resistance is short-circuited. Because of the inductive character of the power supply source the current required to charge the uncharged capacitor on the newly inserted circuit board is essentially provided by the charged decoupling input capacitors of the already connected circuit boards. In order that the variation of the voltage across the charged capacitors and therefore across the already connected printed circuit boards should be small at the moment the current limiting resistance is short-circuited, this resistance should be much smaller than the load resistance of the newly inserted circuit board. On the other hand this limiting resistance should be sufficiently high to form with the capacitor on the newly inserted board a time constant which is sufficient to ensure a gradual charging of this capacitor in the time interval during which the power source cannot directly supply current to the newly inserted board. This means that for the current limiting resistance a compromise value has to be chosen.

An object of the present invention is to provide a current control circuit of the above type but which allows a more adequate control of the current supplied to the circuit board.

According to the invention this object is achieved due to the fact that said control circuit further includes control means which when said current limiting resistance is coupled to said parallel circuit prevent current flow in said load impedance, and which when said current limiting resistance is short-circuited allow current flow in said load impedance during gradually increasing time periods.

By first preventing the flow of current in the load impedance the current limiting resistance may be given a value sufficient to realize the above mentioned required time constant. On the other hand, by afterwards allowing current to flow in the load impedance during gradually increasing time periods the current to be provided by the electric power source varies gradually too.

The above mentioned and other objects and features of the invention will become more apparent and the invention itself will be best understood by referring to the following description of an embodiment taken in conjunction with the accompanying drawings wherein :

Fig. 1 represents a printed circuit board PCB1 able to be connected through a connector CP1 to an electric power source PS to which a plurality of other printed circuit boards PCB have already been connected;

Fig. 2 represents a printed circuit board PCB2 able to be connected to the electric power source PS of Fig. 1 through a connector CP2 and carrying a current control circuit according to the invention;

Fig. 3 shows control signal generator circuit PGC of Fig. 2 in detail;

Fig. 4 represents a control signal generated at the output PO of this generator circuit.

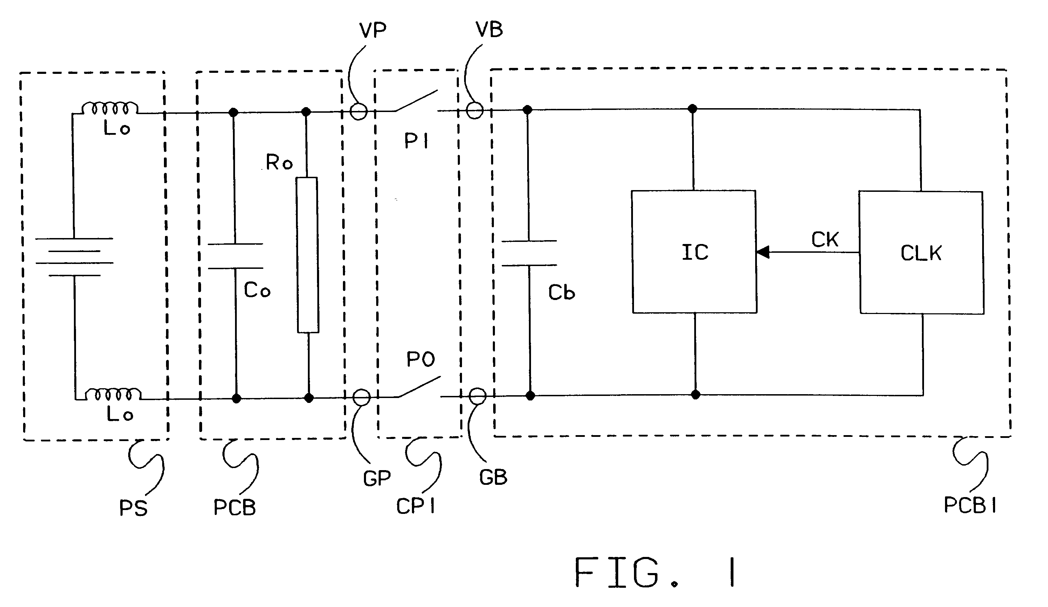

Principally referring to Fig. 1 the latter shows an electric power source PS whose inductive character is schematically represented by coils Lo. This electric power source PS is supposed to be already connected to a plurality of printed circuit boards PCB which are represented by their equivalent circuit comprising a charged decoupling input capacitor Co and a load resistance Ro connected in parallel across terminals VP and GP. A further printed circuit PCB1 is able to be connected to the power source PS through contact fingers Po and P1 of a connector CP1. The printed circuit boards PCB1 carries - connected in parallel between terminals VB and GB - a decoupling input capacitor Cb, a clock circuit CLK generating a clock signal CK, and an integrated electronic circuit IC controlled by the clock signal.

It is assumed that the integrated circuit IC is constituted by CMOS active devices. Such devices are controlled by the clock signal CK and as long as this clock signal is not applied to them they do not dissipate electric power. On the other hand, their power consumption increases/decreases when the duty cycle with which the clock signal is applied increases/decreases.

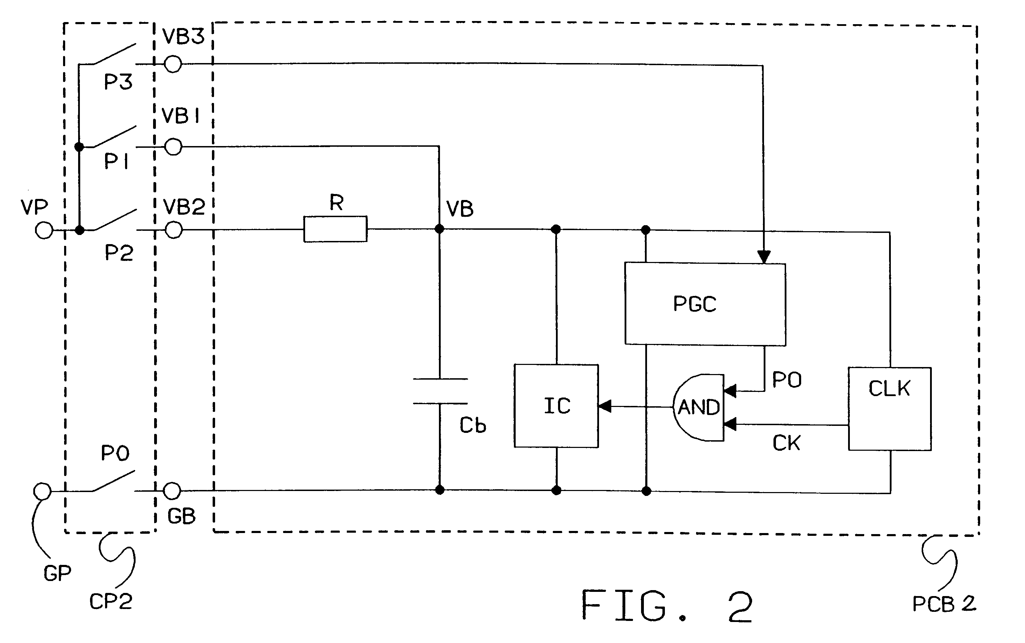

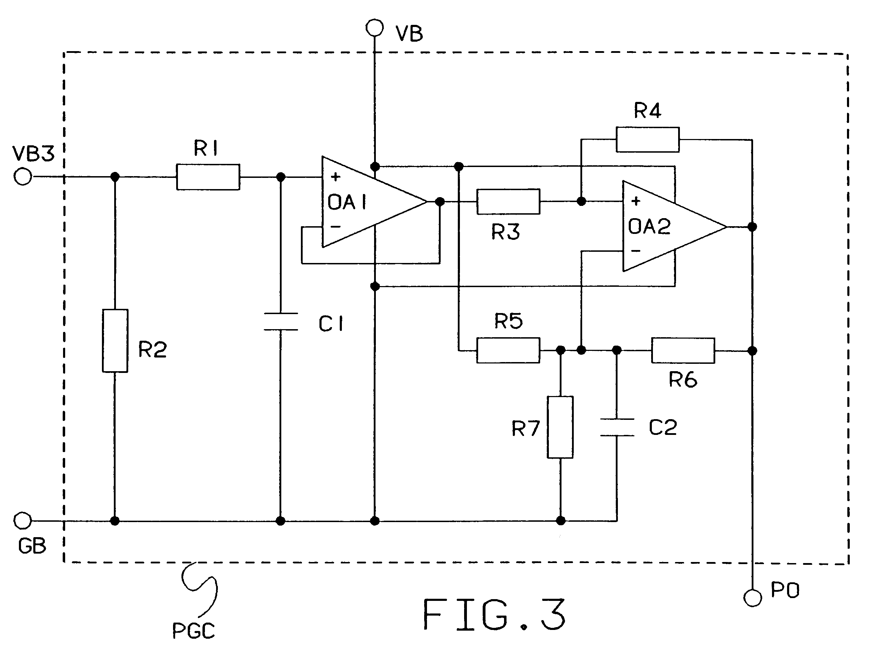

When the contact fingers Po and P1 are both closed the clock circuit CLK is operated so that the clock signal CK is applied to the circuit IC which therefore consumes electric power and behaves as a load impedance coupled in parallel with capacitor Cb. Without precaution a considerable voltage variation would be produced across the parallel circuit Ro, Co. To avoid this, use is made of a suitable current control circuit shown in Figs. 2 and 3.

Reference is first made to Fig. 2 which shows a printed circuit PCB2 similar to PCB1 of Fig. 1 but carrying a current control circuit and able to be coupled to the electric power source PS of Fig. 1 through a connector CP2 different from CP1.

The printed circuit board PCB2, just like PCB1 also includes a parallel circuit connected between terminals VB and GB and comprising an integrated electronic circuit IC, a clock circuit CLK and a decoupling input capacitor Cb. The current control circuit includes a resistance R and a control signal generator circuit PGC also fed between terminals VB and GB and moreover controlled from a terminal VB3. It has an output PO which is connected to the input of an AND gate AND having another input connected to the clock output CK of the clock circuit CLK. The output of the AND-gate AND is connected to a control input of the integrated circuit IC.

The connector CP2 includes contact fingers Po to P3 :
- Po allows the interconnection of ground terminal GP of connector CP2 to terminal GB which is connected to Cb, IC, PGC and CLK;
- P1, P2 and P3 allow the interconnection of the live terminal VP at 5 Volts of connector CP2 to terminals VB1, VB2 and VB3 respectively. VB1 is directly connected to VB; VB2 is connected to VB via the above resistor R and VB3 is a control terminal of PGC;

The contact fingers are in fact constituted by pins : Po and P2 having a same length, and being longer than P1 which is itself longer than P3.

Principally referring to Fig. 3 the control signal generator circuit PGC shown therein has input terminals VB, GB and VB3, and output terminal PO. The input terminal VB3 is connected to terminal GB, on the one hand via resistor R2 and on the other hand through resistor R1 in series with capacitor C1 together forming an integrator circuit. The junction point of R1 and C1 is connected to the non-inverting input of an isolating operational amplifier OA1 which is fed between VB and GB and has an output directly connected to its inverting input. The output of OA1 is also connected via resistor R3 to the non-inverting input of operational amplifier OA2 which is also fed between VB and GB and whose output PO is connected to its non-inverting input through a positive feedback resistor R4. The output PO of OA2 is also connected to its inverting input via a negative feedback resistor R6. Finally this inverting input is also linked to the junction point of resistors R5 and R7 which are branched between terminals VB and GB, resistor R7 being shunted by capacitor C2.

The operation of the above described current control circuit is as follows.

When the printed circuit board PCB2 is inserted in the connector CP2 the contact fingers Po, P2; P1 and P3 are successively closed during first, second and third steps respectively.

During the first and second steps the operation of the control signal generator circuit PGC is inhibited because contact P3 is open, so that the output signal PO is de-activated. As a consequence the AND-gate AND is inhibited due to which integrated circuit IC is prevented from being operated. It therefore consumes no electric power and may be considered as a very high impedance.

During the first step wherein contact fingers PO and P2 are closed, resistor R is connected between terminals VP and VB . It thus interconnects PS and PCB on the one hand, and the uncharged input capacitor Cb on the other hand. Before the electric power supply source PS can supply current to charge the latter capacitor Cb, due to its inductive character, this charge current is supplied by capacitor Co. But due to the fact that no current can flow through the integrated circuit IC the latter presents a load impedance which is much larger than R, so that the resistor R may be given any value sufficient to provide with Cb a time constant large enough to ensure a gradual charging of this capacitor in the time interval during which the electric power source cannot supply charge current. Thus, the voltage variation across the parallel circuit RO, CO, i.e. across the already connected presented circuit boards PCB remains very small.

During the first step also a voltage is established across capacitor C2 (Fig. 3).

During the second step wherein contact finger P1 is closed resistor R is short-circuited so that the electric power source PS can then freely supply current. Because the voltage VB on Cb nearly equals the supply voltage VP, no significant voltage drop will occur on Co at this closure of P1.

Also the voltage across capacitor C2 is increased and since no voltage is yet applied to the input terminal VB3 of the pulse generator circuit PGC the voltage at the inverting input of OA2 is larger than that at its non-inverting input so that the output P0 of OA2 is at the logical level 0.

During the third step wherein contact finger P3 is closed capacitor C1 is gradually charged towards VP = 5 Volts through resistor R1. Because the voltage at the non-inverting input of OA1 gradually increases the same is true for the voltage applied to the non-inverting input of OA2 via resistor R3. When the voltage at this input exceeds that at its inverting input the output signal P0 of OA2 goes to the logical level 1. As a consequence the voltage at the non-inverting input of OA2 suddenly increases, whilst on the other hand capacitor C2 is further charged via resistor R6. As soon as the voltage at the inverting input of OA2 becomes larger than the voltage at the non-inverting input thereof the output signal PO switches to logical level 0. When this happens the voltage at the non-inverting input decreases suddenly, whilst that at the inverting input gradually decreases due to capacitor C2 being discharged.

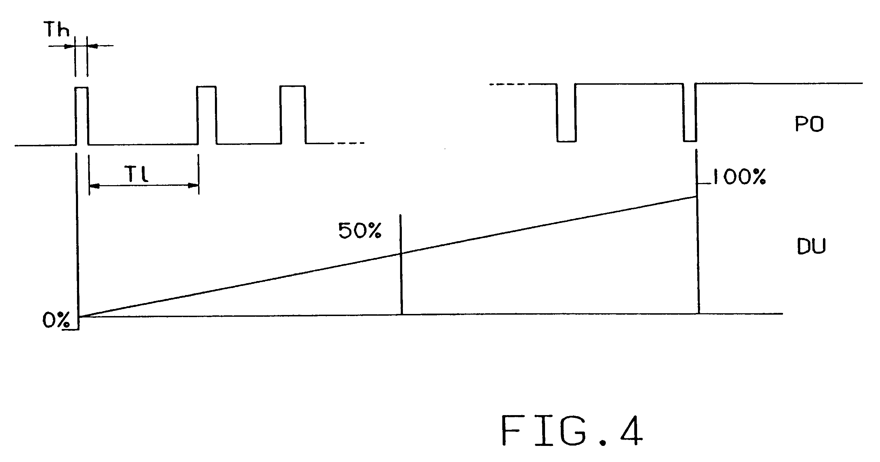

In this way and during the whole charging time interval of capacitor C1 the duration of the intervals Th during which the operational amplifier output PO is at logical level 1 gradually increase. This is schematically represented in Fig. 4 wherein Th and Tl are used to indicate the time periods during which PO is activated and de-activated respectively. This signal has a duty cycle Th/(Th + Tl) which increases in a substantially linear way from a minimum value close to 0% (when PO would be continuously de-activated) to a maximum value close to 100% (when PO would be continuously activated).

The control signal PO applied to the AND-gate AND controls the supply of the clock signal CK to the integrated circuit IC. And because this clock signal CK is supposed to be constituted by pulses whose period is fraction of the minimum duration of the active interval Th of PO the clock pulses CK are allowed to the circuit IC during the active time intervals Th of PO. This means that the clock pulses are allowed to the circuit IC during gradually (and even linearly) increasing time periods. As a consequence the current supplied by the power source PS during these time periods also varies gradually.

It may be calculated that the voltage ripple DV produced across capacitor Cb is equal to

$$DV = \frac{In}{Cb+C0} \cdot \frac{Th.Tl}{Th+Tl}$$

wherein In is the nominal current provided by PS to PCB2 and flowing through the circuit IC when the clock signal CK is continuously applied

Hence DV is function of the duty cycle Th/(Th + Tl) and of Tl so that for a linear increase of the duty cycle (as described above) the value of DV may be determined by a suitable choice of Tl

When the printed circuit board PCB2 is extracted from the connector CP2 the contact fingers are opened in the reverse order i.e. P3, P1 and Po, P2. By the opening of P3 capacitor C1 is discharged to ground via R1 and R2 in series. The above duty cycle then decreases linearly.

It should be noted that instead of resistor R use can be made of a coil.

While the principles of the invention have been described above in connection with specific apparatus, it is to be clearly understood that this description is made only by way of example and not as a limitation on the scope of the invention.

**Claims**

1. Current control circuit for a circuit board (PCB2) carrying a parallel circuit comprising an input capacitor (Cb) shunted by a load impedance (IC), said control circuit including a current limiting resistance (R) able to be first coupled between an electric power source (PS) and said parallel circuit and to be then short-circuited, characterized in that said control circuit further includes control means (PGC, AND, CLK) which when said current limiting resistance (R) is coupled to said parallel circuit (Cb, IC) prevent current flow in said load impedance (IC), and which when said current limiting resistance (R) is short-circuited allow current flow in said load impedance (IC) during gradually increasing time periods (Th).

2. Current control circuit according to claim 1, characterized in that said load impedance (IC) is constituted by an electronic circuit including at least one active device having substantially no power dissipation when no operating signal (CK) is applied to it, and that said control means include a source (CLK) of said operating signal (CK), a control signal (PO) generator (PGC) and a gating circuit (AND) which couples said operating signal (CK) from said source (CLK) to a control input of said electronic circuit (IC) and is controlled by said control signal (PO) which inhibits said gating circuit (AND) during de-activated time intervals (Tl) and enables said gating circuit during said time periods (Th).

3. Current control circuit according to claim 2, characterized in that said control signal generator (PGC) is arranged so that said control signal (PO) has a variable duty cycle (Th/(Th + Tl).

4. Current control circuit according to claim 2, characterized in that said operating signal (CK) is a clock signal whose period is a fraction of the smallest activated time period (Th).

5. Current control circuit according to claim 2, characterized in that said gating circuit (AND) is an AND-gate.

6. Current control circuit according to claim 2, characterized in that said control signal generator (PGC) includes an integrator circuit (R1, C1) whose output is coupled to the non-inverting input ( + ) of a first operational amplifier via the series connection of an isolating second operational amplifier (OA1) and a first resistance (R3), said first amplifier having a positive feedback second resistance (R4), a negative feedback third resistance (R6), an output (PO) which constitutes the output of the generator, and an inverting input which is connected to the junction point of a resistive voltage divider (R5, R7) constituted by fourth (R5) and fifth (R7) resistances, said fifth resistance (R7) being shunted by a capacitor (C2).

7. Current control circuit according to claim 1, characterized in that said control means (PGC, AND, CLK) are arranged so that said time periods increase linearly.

**Patentansprüche**

1. Stromsteuerschaltung für eine gedruckte Schaltung (PCB2), welche eine Parallelschaltung bestehend aus einem Eingangskondensator (Cb) und einer Ladeimpedanz (IC) enthält, welche außerdem einen Strombegrenzungswiderstand (R) aufweist, welcher zunächst zwischen einer Energiequelle (PS) und die Parallelschaltung geschaltet und dann kurzgeschlossen werden kann, **dadurch gekennzeichnet**, daß die Steuerschaltung weitere Steuermittel (PGC, AND, CLK) enthält, welche den Stromfluß in die Ladeimpedanz (IC) verhindern, wenn der Strombegrenzungswiderstand (R) angeschlossen wird, und welche einen Stromfluß in die Ladeimpedanz (IC) während allmählich ansteigender Zeitspannen (Th) gestattet, wenn der Strombegrenzungswiderstand (R) kurzgeschlossen ist.

2. Stromsteuerschaltung nach Anspruch 1, dadurch gekennzeichnet, daß die Ladeimpedanz (IC) aus einer elektronischen Schaltung besteht, welche wenigstens ein aktives Bauelement enthält, welches keine Energie verbraucht, wenn an ihm kein Betriebssignal (CK) anliegt, und daß die Steuermittel eine Quelle (CLK) für das Betriebssignal (CK), einen Steuersignalgenerator (PGC) und eine Verknüpfungsschaltung (AND) enthalten, welche das Betriebssignal (CK) von der Quelle (CLK) einem Steuereingang der elektronischen Schaltung (IC) zuführt und von dem Steuersignal (PO) gesteuert wird, welches die Verknüpfungsschaltung (AND) während bestimmter Zeitintervalle (T1) abschaltet und während anderer Zeitintervalle (Th) einschaltet.

3. Stromsteuerschaltung nach Anspruch 2, dadurch gekennzeichnet, daß der Steuersignal-Generator (PGC) derart angeordnet ist, daß das Steuersignal (PO) ein veränderliches Tastsignal (Th/(Th + T1) aufweist.

4. Stromsteuerschaltung nach Anspruch 2, dadurch gekennzeichnet, daß das Betriebssignal (CK) ein Taktsignal ist, dessen Periodendauer ein Bruchteil der geringsten Einschaltdauer (Th) ist.

5. Stromsteuerschaltung nach Anspruch 2, dadurch gekennzeichnet, daß das Verknüpfungsglied (AND) ein AND-Verknüpfungsglied ist.

6. Stromsteuerschaltung nach Anspruch 2, dadurch gekennzeichnet, daß der Steuersignalgenerator (PGC) eine Integratorschaltung (R1, C1) enthält, deren Ausgang über die Serienschaltung eines Trenn-Operationsverstärkers (OA1) und eines ersten Widerstandes (R3) mit dem nichtinvertierenden Eingang ( + ) eines ersten Operationsverstärkers gekoppelt ist, wobei der erste Verstärker eine positive Rückkopplung über einen zweiten Widerstand (R4), eine negative Rückkopplung über einen dritten Widerstand (R6) und einen Ausgang (PO), der den Generatorausgang darstellt, und außerdem einen invertierenden Eingang aufweist, der mit dem Abgriff eines Spannungsteilers (R5, R7) aus einem vierten (R5) und einem fünften Widerstand (R7) verbunden ist, wobei dem fünften Widerstand (R7) ein Kondensator (C2) parallel geschaltet ist.

7. Stromsteuerschaltung nach Anspruch 1, dadurch gekennzeichnet, daß die Steuermittel (PGC, AND, CLK) in der Weise angeordnet sind, daß die Zeitspannen linear zunehmen.

**Revendications**

1. Circuit de commande du courant pour une carte de circuit (PCB2) portant un circuit parallèle comportant un condensateur d'entrée (Cb) shunté par une impédance de charge (IC), ledit circuit de commande comprenant une résitance (R) de limitation du courant prévue pour être tout d'abord couplée entre une source de puissance électrique (PS) et ledit circuit parallèle puis pour être mise en court-circuit, circuit caractérisé par le fait que ledit circuit de commande comporte en outre des moyens de commande (PGC, AND, CLK) qui, lorsque ladite résistance (R) de limitation du courant est couplée audit circuit parallèle (Cb, IC), empêchent le passage du courant dans ladite impédance de charge (IC) et qui, lorsque ladite résistance (R) de limitation du courant est mise en court-circuit, permettent le passage du courant dans ladite impédance de charge (IC) au cours de périodes (Th) graduellement croissantes.

2. Circuit de commande du courant selon la revendication 1, caractérisé par le fait que ladite impédance de charge (IC) est constituée par un circuit électronique comportant au moins un dispositif actif ne présentant sensiblement pas de consommation d'énergie lorsqu'aucun signal de fonctionnement (CK) ne lui est appliqué, et par le fait que lesdits moyens de commande comportent une source (CLK) dudit signal de fonctionnement (CK), un générateur (PGC) de signaux de commande (PO) et une porte (AND) qui couple ledit signal de fonctionnement (CK), provenant de ladite source (CLK), à une entrée de commande dudit circuit électronique (IC) et qui est commandée par ledit signal de commande (PO) qui verrouille ladite porte (AND) au cours d'intervalles de temps désactivés (T1) et valide ladite porte au cours desdites périodes (Th).

3. Circuit de commande du courant selon la revendicaiton 2, caractérisé par le fait que ledit générateur (PGC) de signaux de commande est conçu de façon que ledit signal de commande (PO) présente un rapport cyclique variable (Th/(Th + T1).

4. Circuit de commande du courant selon la revendication 2, caractérisé par le fait que ledit signal de fonctionnement (CK) est un signal d'horloge dont la période est une fraction de la plus petite période de temps activée (Th).

5. Circuit de commande du courant selon la revendication 2, caractérisé par le fait que ladite porte (AND) est une porte ET.

6. Circuit de commande du courant selon la revendication 2, caractérisé par le fait que ledit générateur (PGC) du signal de commande comporte un circuit intégrateur (R1, C1) dont la sortie est couplée à l'entrée de non-changement de signe (+) d'un premier amplificateur opérationnel par l'intermédiaire de la connexion de série d'un second amplificateur opérationnel (OA1) d'isolement et d'une première résistance (R3), ledit premier amplificateur présentant une seconde résistance (R4) de rétroaction positive, une troisième résistance (R6) de rétroaction négative, une sortie (PO) qui constitue la sortie du générateur, et une entrée de changement de signe qui est reliée au point de jonction d'un diviseur de tension résistif (R5, R7) constitué par une quatrième (R5) et une cinquième (R7) résistances, ladite cinquième résistance (R7) étant shuntée par un condensateur (C2).

7. Circuit de commande du courant selon la revendication 1, caractérisé par le fait que lesdits moyens de commande (PGC, AND, CLK) sont conçus de façon que lesdites périodes de temps croissent linéairement.

FIG. 1

EP 0 458 798 B1

FIG. 2

EP 0 458 798 B1

FIG.3

9

FIG.4

EP 0 458 798 B1